# EUROPEAN PATENT APPLICATION

(11) **EP 3 264 209 A1**
(43) Date of publication of application: **03.01.2018**
(21) Application number: 16755491.4
(22) Date of filing: 23.02.2016
(51) Int. Cl.: G05B 23/02, G05B 19/418, G06Q 50/04

(54) **MECHANICAL DEVICE MANAGEMENT SYSTEM, MECHANICAL DEVICE MANAGEMENT DEVICE, SERVER FOR MANAGING MECHANICAL DEVICE, MECHANICAL DEVICE, AND MECHANICAL DEVICE MANAGEMENT METHOD**

(30) Priority: 24.02.2015 JP 2015034435
(71) Applicant: Hallys Corporation, Akashi-shi Hyogo 674-0064 (JP)
(72) Inventor: AJI Hirokazu, Akashi-shi Hyogo 674-0064 (JP); AOYAMA Hiroshi, Akashi-shi Hyogo 674-0064 (JP)
(74) Representative: Horn Kleimann Waitzhofer Patentanwälte PartG mbB
(86) International application number: PCT/JP2016/055271
(87) International publication number: WO 2016/136747

(57) **Abstract**

Provided is a mechanical device management system in which a cause and measure of a malfunction can be considered even when timing to be a point of the cause and measure of the malfunction does not coincide with the timing at which a signal is issued to notify that the malfunction has occurred. A machine device management system 100 comprising: a machine device 200 having an operation screen display device 220 for displaying an operation screen 600 to be operated by a user; a storage device 320 for storing machine operation data including continuous image data generated by constantly acquiring the operation screen 600; a management device 400 disposed at a position different from the machine device 200) and including a display device 420 capable of displaying an image based on continuous image data 902 stored in the storage device 320; and a control device 310 for sending, to the display device 420, the image from an arbitrary time based on the continuous image data 902.

## Description

### TECHNICAL FIELD

The present invention relates to a mechanical device management system storing mechanical operation data for investigation of a cause and consideration of measures for a malfunction occurring in a mechanical device, a mechanical device management device, a server for managing the mechanical device, the mechanical device, and a mechanical device management method.

### BACKGROUND ART

Conventionally, a technique has been developed for diagnosing a machine device located in a separated position (for example, Patent Literature 1). Patent Literature 1 discloses a technique for transmitting all of display data in the machine device as diagnostic data, at timing at which a transmission request of the diagnostic data is issued, when the transmission request for the diagnostic data is issued in a case where, for example, some malfunction occurred, and a technique for transmitting, not all of the display data at the timing, but only differential data.

### CITATION LIST

### PATENT LITERATURE

Patent Literature 1: JP H5-108140 A

### SUMMARY OF THE INVENTION

### TECHNICAL PROBLEMS

However, in the technique disclosed in Patent Literature 1, since only the display data at the timing at which the transmission request for the diagnostic data is issued is used as the diagnostic data, there is a problem that, when timing to be a point of a cause and measure of the malfunction has occurred before the timing at which a transmission request of the diagnostic data has been issued, the point of the cause and measure of the malfunction cannot be found from the diagnostic data.

The present invention has been made to solve the above problem, and an object thereof is to provide a machine device management system and the like in which the cause and measure of the malfunction can be considered even when the timing to be the point of the cause and measure of the malfunction does not coincide with the timing at which a signal is issued for notifying that the malfunction has occurred.

### SOLUTION TO PROBLEMS

According to an aspect of the present invention, there is provided a mechanical device management system comprising: a mechanical device having an operation screen display device for displaying an operation screen to be operated by a user; a storage device for storing mechanical operation data including continuous image data generated by constantly acquiring the operation screen; a management device including a display device capable of displaying an image based on the continuous image data stored in the storage device; and a control device for sending to the display device the image from an arbitrary time based on the continuous image data.

Preferably, the mechanical operation data further includes operating parameters of the mechanical device.

Preferably, the mechanical device has a machine side control device for causing the operating parameters to be displayed on the operation screen display device.

Preferably, the operation screen includes a contact key which is selectable by a user, and the machine side control device accepts selection of the contact key, and displays the operating parameters on the operation screen display device.

Preferably, the machine side control device having accepted the selection of the contact key further transmits the operating parameters to the storage device.

Preferably, the machine side control device having accepted the selection of the contact key transmits to the management device a contact signal for notifying that the contact key is selected.

Preferably, each time the contact key is selected, the operating parameters displayed by the selection of the contact key, and a data set including identification image data being the continuous image data in a time period before and after the selection of the contact key are recorded in the storage device, and the management device receives any of the data sets from the storage device, and displays on the display device the operating parameters and the identification image data included in the data set.

Preferably, the control device transmits, to the management device, another of the data sets including contents similar to contents of the data set recorded in the storage device by the selection of the contact key.

Preferably, the management device transmits to the mechanical device an operating parameter change signal for changing the operating parameters in the mechanical device, and after acceptance of the operating parameter change signal, the machine side control device of the mechanical device changes the operating parameters of the mechanical device based on the operating parameter change signal.

Preferably, the management device further has a management side control device, and the management side control device acquires still image data from the continuous image data, and accepts writing to a still image based on the still image data and generates a written still image, and then transmits the written still image to the mechanical device.

According to another aspect of the present invention, there is provided a mechanical device management device including a display device for displaying an image from an arbitrary time based on continuous image data received from a storage device for storing mechanical operation data including the continuous image data, the continuous image data being generated by constantly acquiring an operation screen of a mechanical device to be operated by a user.

According to another aspect of the present invention, there is provided a server for managing the mechanical device, the server including: a storage device for storing mechanical operation data including continuous image data generated by constantly acquiring an operation screen of a mechanical device to be operated by a user; and a control device for transmitting, to a display device capable of displaying an image based on the continuous image data stored in the storage device, the image from an arbitrary time based on the continuous image data.

According to another aspect of the present invention, there is provided a mechanical device including an operation screen display device for displaying an operation screen to be operated by a user, the mechanical device for transmitting, to a storage device, mechanical operation data including continuous image data generated by constantly acquiring the operation screen, wherein an image from an arbitrary time is displayed on the display device in the mechanical device, based on the continuous image data.

According to another aspect of the present invention, a mechanical device management method includes displaying an image on a display device upon receipt of the image from an arbitrary time based on continuous image data, from a storage device for storing mechanical operation data including the continuous image data generated by constantly acquiring an operation screen of a mechanical device to be operated by a user.

According to another aspect of the present invention, a mechanical device management method includes: storing, in a storage device, mechanical operation data including continuous image data generated by constantly acquiring an operation screen of a mechanical device to be operated by a user; and transmitting, to a display device capable of displaying an image based on the continuous image data stored in the storage device, the image from an arbitrary time based on the continuous image data.

According to another aspect of the present invention, a mechanical device management method includes transmitting, to a storage device, mechanical operation data including continuous image data generated by constantly acquiring an operation screen to be operated by a user, wherein an image from an arbitrary time is displayed on the display device in the mechanical device, based on the continuous image data.

### ADVANTAGEOUS EFFECTS OF INVENTION

According to the present invention, there can be provided a mechanical device management system and the like in which the cause and measure of the malfunction can be considered even when the timing to be the point of the cause and measure of the malfunction does not coincide with the timing at which a signal is issued for notifying that the malfunction has occurred.

### BRIEF DESCRIPTION OF THE DRAWINGS

Fig. 1 is a conceptual diagram illustrating an example of a configuration of a machine device management system 100 to which the present invention is applied.
Fig. 2 is a diagram illustrating an example of a configuration of the machine device management system 100.
Fig. 3 is a diagram illustrating various types of data to be used in the machine device management system 100.
Fig. 4 is a diagram illustrating an example of an operation screen 600 to be displayed on an operation screen display device 220 of a machine device 200.
Fig. 5 is a diagram illustrating an example of the operation screen 600 to be displayed on the operation screen display device 220 of the machine device 200.
Fig. 6 is a diagram illustrating an example of the operation screen 600 to be displayed on the operation screen display device 220 of the machine device 200.
Fig. 7 is a diagram illustrating an example of the operation screen 600 to be displayed on the operation screen display device 220 of the machine device 200.
Fig. 8 is a diagram illustrating an example of a screen to be displayed on a display device 420 of a management device 400.
Fig. 9 is a diagram illustrating an example of the screen to be displayed on the display device 420 of the management device 400.
Fig. 10 is a diagram illustrating an example of the screen to be displayed on the display device 420 of the management device 400.
Fig. 11 is a functional block diagram illustrating a process by the machine device 200.
Fig. 12 is a functional block diagram illustrating a process by a server 300.
Fig. 13 is a functional block diagram illustrating a process by the management device 400.
Fig. 14 is a flowchart of the process by the machine device 200.
Fig. 15 is a flowchart of the process by the server 300.
Fig. 16 is a flowchart of the process by the management device 400.

### DESCRIPTION OF EMBODIMENTS

### (Configuration of machine device management system 100)

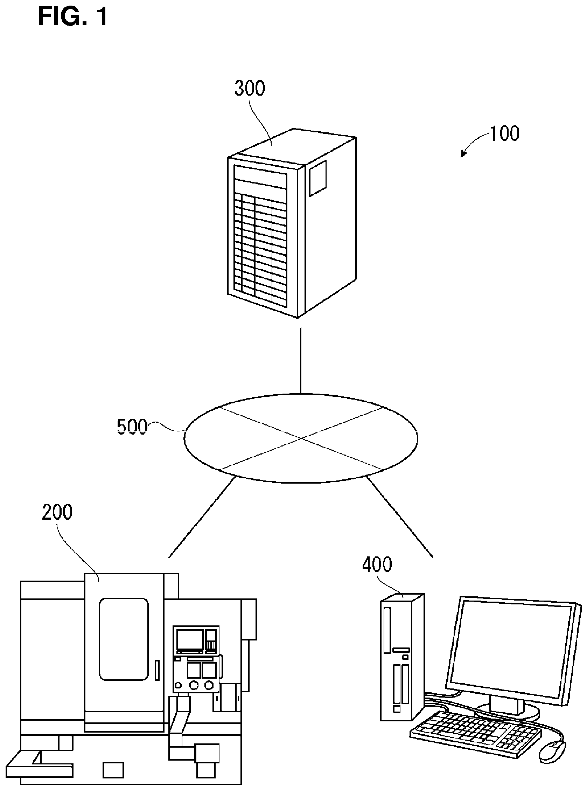

As illustrated in Fig. 1, a machine device management system 100 to which the present invention is applied generally includes a machine device 200, a server 300, a management device 400, and a network device 500.

The machine device 200 is a device to be managed by the machine device management system 100. In an embodiment, as an example of the machine device 200, a processing device is used for performing grinding processing and drilling processing of a circumference of a glass plate for a smart phone and the like. As the machine device 200, besides such a processing device, machines other than the processing device, such as a copy machine and a cutting machine, can be considered. In the following description, an operator who operates the machine device 200 is referred to as a "user," and a person who operates the management device 400 is referred to as a "manager."

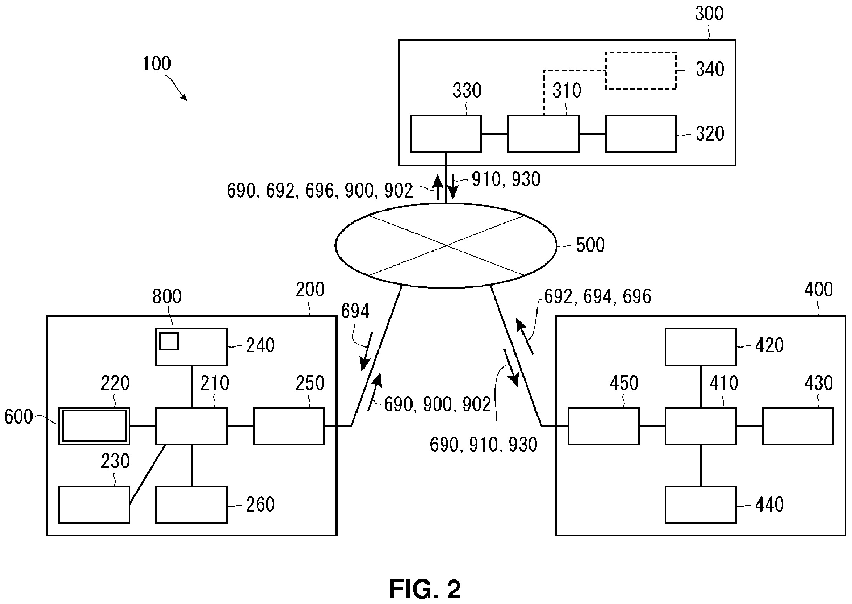

As illustrated in Fig. 2, the machine device 200 generally includes a machine side control device 210, an operation screen display device 220, a machine side input device 230, a machine side storage device 240, a machine side communication device 250, and a processing unit 260.

The machine side control device 210 is a device for executing various processes described later, by executing a program stored in the machine side storage device 240 or an external storage medium. In the case of the present embodiment, the machine side control device 210 is a CPU incorporated in the machine device 200 connected to the network device 500.

The operation screen display device 220 displays an operation screen 600 that is necessary when the user handles the machine device 200. As the operation screen display device 220, various monitors, such as a liquid crystal display and an organic display, can be used.

The machine side input device 230 is used by the user for inputting information such as various setting values (parameters) necessary for operation to the machine device 200, and for example, a keyboard, a mouse, and a touch panel can be considered. In the present embodiment, a touch panel is used. That is, in the present embodiment, the operation screen display device 220 and the machine side input device 230 are integrally formed with each other.

The machine side storage device 240 is a device for storing the program for operating the machine side control device 210, the parameters of the machine device 200, and the like. In the case of the present embodiment, the machine side storage device 240 is a hard disk drive incorporated in the machine device 200. Note that the machine side storage device 240 is implemented by various types of random access memory (RAM), various types of read-only memory (ROM), flash memory, and the like. In addition, the machine side storage device 240 is also implemented by a storage medium to be used through an interface, such as a universal serial bus (USB) (registered trademark) memory, compact disc (CD), digital versatile disk (DVD), memory card, solid state drive, integrated circuit (IC) card, optical card, mask ROM, erasable programmable read only memory (EPROM), or electronically erasable programmable read-only memory (EEPROM). Since a storage device 320 of the server 300 and a management side storage device 440 of the management device 400 described later are the same on this point, detailed descriptions for the storage device 320 and the management side storage device 440 are omitted.

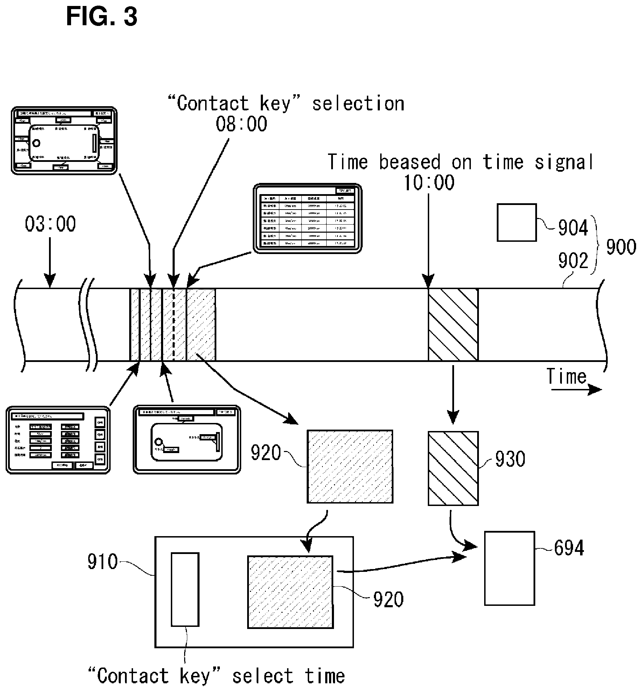

The machine side communication device 250 performs input/output communication when the machine side control device 210 outputs, to the network device 500, data such as continuous image data 902 and operating parameters 904 of the operation screen display device 220 (see Fig. 3), or receives the data from the network device 500, conversely. Note that, as the operating parameters 904, for example, path information calculated to match a deviation when the glass plate is placed to be deviated from a reference position, and a speed, time, and number of rotations in each processing position of a grindstone can be considered. Here, Fig. 3 represents the continuous image data 902 extracted for a predetermined time, for explaining each data (such as identification image data 920 described later).

Returning to Fig. 2, the processing unit 260 is controlled by the machine side control device 210, and actually performs grinding processing and drilling processing of the circumference of the glass plate.

The server 300 includes a control device 310, the storage device 320, a server side communication device 330, and a server side input/display device 340 to be provided as necessary.

The control device 310 executes various processes described later, by executing the program stored in the storage device 320 or an external storage medium. In the case of the present embodiment, the control device 310 is a CPU as a "processor" incorporated in the server 300 connected to the network device 500.

The storage device 320 stores the program for operating the control device 310, the continuous image data 902 of the operation screen display device 220 of the machine device 200 sent through the network device 500 from the machine device 200, and the like. In the case of the present embodiment, the storage device 320 is a hard disk drive as a "storage memory" incorporated in the server 300. Note that a storage capacity of the storage device 320 is suitably set to, for example, a capacity capable of storing machine operation data 900 (the continuous image data 902, data of the operating parameters 904, and the like) sent from the machine device 200, in particular, the continuous image data 902 being a large amount of data, for several days.

The server side communication device 330 performs input/output communication when the server 300 outputs various types of data to the network device 500, or conversely, receives the data of the continuous image data 902 and the like, from the network device 500.

The server side input/display device 340 inputs various setting values for operating the control device 310, and displays an operating status of the control device 310. Note that, after the server 300 is set to be able to automatically perform processes described later, the server side input/display device 340 may be removed.

The management device 400 includes a management side control device 410, a display device 420, a management side input device 430, the management side storage device 440, and a management side communication device 450. Note that, in the present embodiment, a general PC is used as the management device 400. However, the present invention is not limited thereto, and a tablet, smart phone, smart glass, or the like can be used as the management device 400.

The management side control device 410 executes various processes described later, by executing the program stored in the management side storage device 440 or an external storage medium. In the case of the present embodiment, the management side control device 410 is a CPU incorporated in the management device 400 connected to the network device 500.

The display device 420 displays various types of information that are necessary when the continuous image data from the server 300 and the management device 400 are handled. As the display device 420, various monitors can be used such as a liquid crystal display and an organic display.

The management side input device 430 is used by the manager for inputting necessary information to the management device 400, and for example, a keyboard, mouse, touch panel can be considered. In the present embodiment, as the management side input device 430, a general keyboard and mouse are used.

The management side storage device 440 is a device for temporarily storing the program for operating the management side control device 410, and the machine operation data 900 such as the continuous image data 902 of the operation screen display device 220 of the machine device 200 sent through the network device 500 from the server 300. In the case of the present embodiment, the management side storage device 440 is a hard disk drive incorporated in the management device 400 connected to the network device 500.

The management side communication device 450 performs input/output communication when the management device 400 outputs various types of data to the network device 500, or conversely, receives the data such as the continuous image data from the network device 500.

The network device 500 is a device for enabling exchange of data by connecting at least the machine device 200, the server 300, and the management device 400 with each other, and exchanges the data via, for example, the Internet, a local area network (LAN), radio communication, and optical communication. In addition, the server 300 and the management device 400 can be directly connected with each other by using a cable and the like, and in this case, the cable and the like correspond to the network device 500.

In the present embodiment, the machine device 200, the server 300, and the management device 400 are placed at positions spaced apart from each other, such as a case where the devices are respectively placed in different regions. However, the machine device 200, the server 300, and the management device 400 may be respectively placed at different rooms in the same building, and moreover, the server 300 and the management device 400 may be integrated to be one device.

### (Example of process by machine device management system 100)

Next, a description is made for an example of a management process of the machine device 200 using the machine device management system 100 according to the present example.

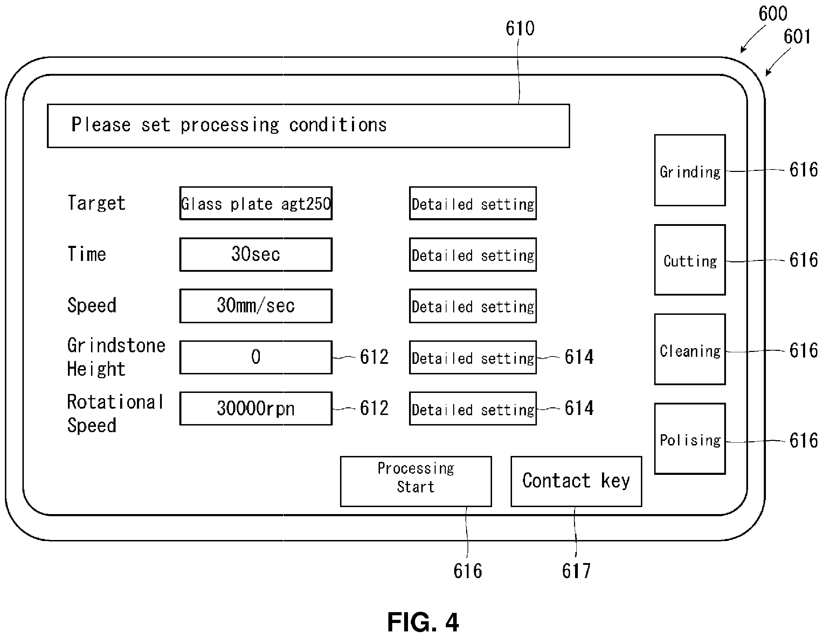

In the machine device management system 100, the operation screen 600 is displayed on the operation screen display device 220 of the machine device 200. As illustrated in Fig. 4, a TOP screen 601 that is a type of the operation screen 600 has a message display section 610, a plurality of parameter display sections 612, detailed setting select keys 614 respectively corresponding to the parameter display sections 612, various command keys 616 typified by a "processing start key" for instructing an actual processing start to the processing unit 260, and a contact key 617.

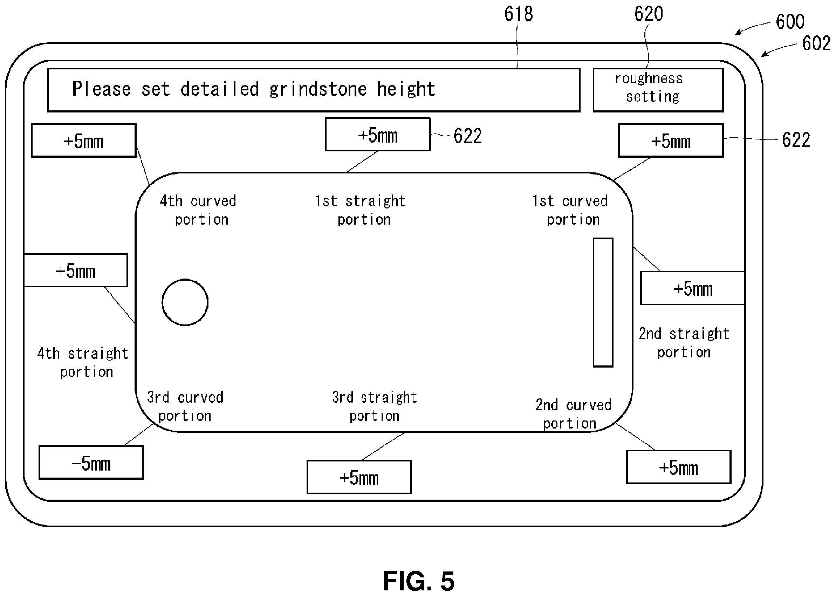

In addition, when the user selects any of the detailed setting select keys 614 (for example, a detailed setting select key 614 for a "grindstone height"), the operation screen display device 220 displays a first detailed setting screen 602 that is a type of the operation screen 600, as illustrated in Fig. 5.

In the first detailed setting screen 602 (Fig. 5) for the "grindstone height," a processing grindstone height can be set in each portion (first to fourth straight portions, and first to fourth curved portions) of the glass plate to be processed. The first detailed setting screen 602 has a message display section 618, a next screen select section 620 (for example, a portion by which a "roughness setting screen" for setting a "roughness" can be selected), and a plurality of numerical value setting sections 622 each of which sets the grindstone height in each portion of the glass plate to be processed.

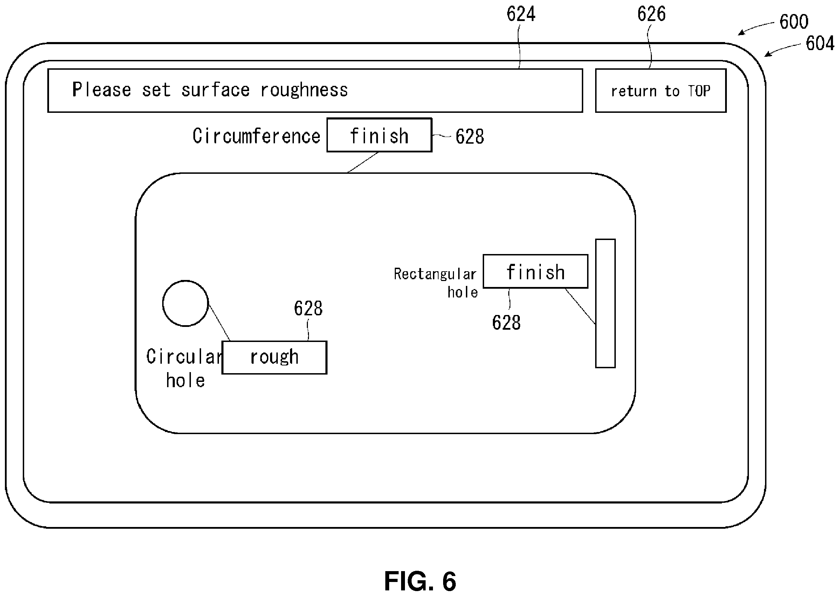

Further, when the user selects the next screen select section 620 ("roughness setting screen"), the operation screen display device 220 displays a second detailed setting screen 604 that is a type of the operation screen 600, as illustrated in Fig. 6.

In the second detailed setting screen 604 (Fig. 6) for the "(surface) roughness," a surface roughness can be set in each portion (circumference, circular hole, and rectangular hole) of the glass plate to be processed. The second detailed setting screen 604 has a message display section 624, a TOP screen select section 626 for returning to the initial operation screen 600, and a plurality of roughness setting sections 628 each of which sets the surface roughness in each portion of the glass plate to be processed. When the user selects the TOP screen select section 626, the screen returns to the initial operation screen 600 (Fig. 4).

Returning to Fig. 4, when the user selects the "processing start key" that is one of the command keys 616 after performing necessary setting in each setting screen, processing by the processing unit 260 is started.

The contact key 617 is selected when the user contacts the management device 400 about occurrence of a malfunction in a case where the malfunction occurs in the processing by the machine device 200, and the like. Here, the "malfunction" means that, for example, the machine device 200 is in a state where a result desired by the user is not obtained regarding the processing. That is, the malfunction includes the one in which there is a problem in the machine device 200 itself such as a failure, and the one caused by erroneous user setting/operation or an environment in which the machine device 200 is placed.

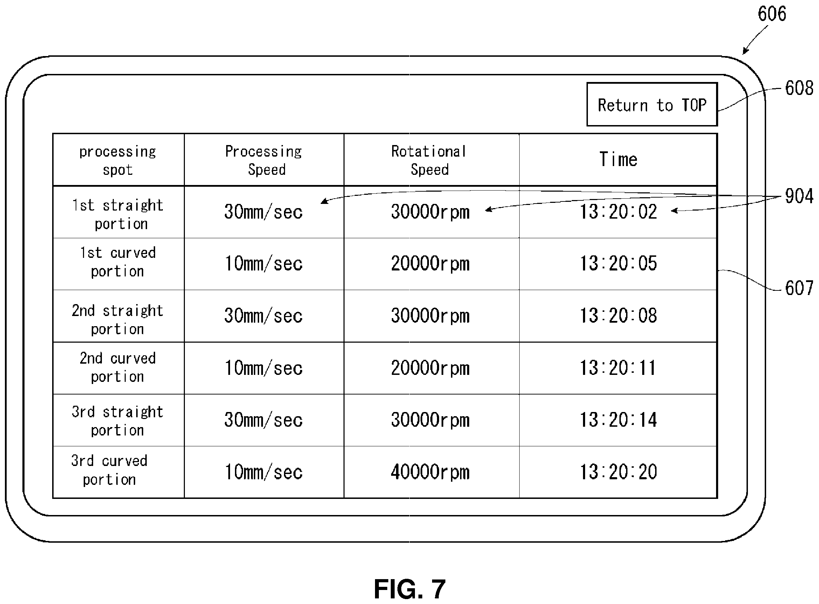

When the user selects the contact key 617, the operation screen display device 220 displays an operating parameter display screen 606 that is a type of the operation screen 600, as illustrated in Fig. 7. The operating parameter display screen 606 includes an operating parameter display section 607 for displaying various types of operating parameters 904 in a list, and a TOP screen select section 608. Note that the operating parameter display section 607 may display, in a list, the preset operating parameters 904 out of the operating parameters 904, and may display all of the operating parameters 904.

The "operating parameters 904" are concepts including not only various explicit setting parameters explicitly set by the user with the numerical value setting sections 622 and the like, but also automatic setting parameters that are automatically set or acquired by the machine device 200 based on the explicit setting parameters. That is, the "operating parameters" mean various parameters which are necessary for operation of the machine device 200, and which may be or may not be explicitly set by the user. In addition, in the present specification, the operating parameters 904, the continuous image data 902, and the like are collectively referred to as the "machine operation data 900" (see Fig. 3).

Therefore, the operating parameter display screen 606 (see Fig. 7) has a meaning that, in particular, the automatic setting parameters that are not explicitly set by the user can also be confirmed in a list. The operating parameter display screen 606 in the present embodiment displays a "processing spot" indicating each portion of the glass plate to be processed, a "processing speed" indicating a moving speed of a spindle in each processing spot, a "rotational speed" of the spindle in each processing spot, and, "time" in which processing of each processing spot is performed. Note that, for the "time," time when processing of the processing spot is started, time when processing of the processing spot is completed, or time when processing of the processing spot is being performed, is set. The operating parameters 904 to be displayed on the operating parameter display screen 606 are not limited to those in the embodiment, and in accordance with a characteristic of the machine device 200, there are suitably displayed operating parameters 904 that are considered to be necessary when a malfunction or failure of the machine device 200 is diagnosed.

In addition, when the user selects the TOP screen select section 608, the screen returns to the initial operation screen 600 (Fig. 4). In this way, the operation screen 600 changes the screen along with condition setting. Note that the device may have one type of operation screen 600 and the screen may not be changed except for parameter input.

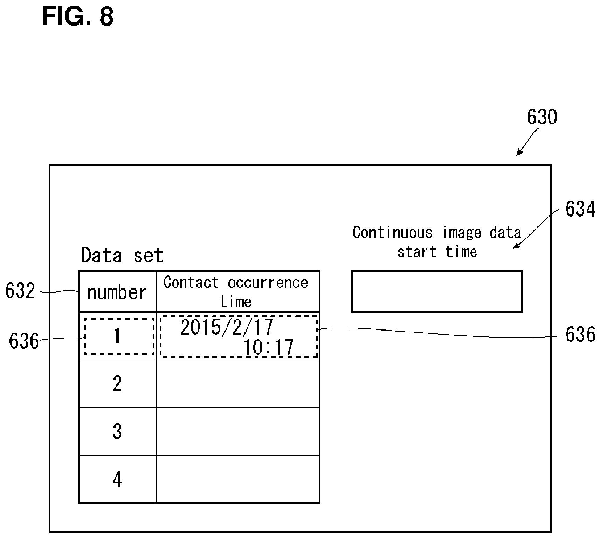

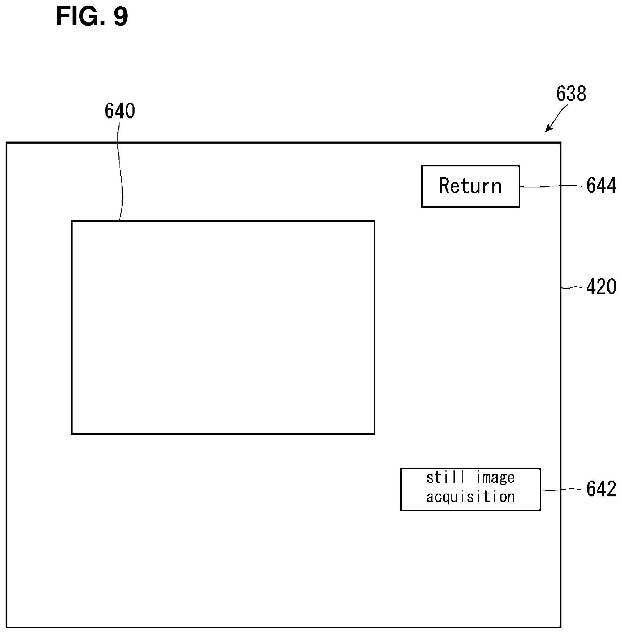

Next, a description is made for a screen to be displayed on the display device 420 of the management device 400. The display device 420 displays at least a data set and others select screen 630 (Fig. 8) for allowing the manager to select any data set 910 (see Fig. 3) stored in the storage device 320, and an identification image display screen 638 (Fig. 9) for displaying an image based on the continuous image data 902 stored in the storage device 320.

As illustrated in Fig. 3, the "data set 910" is data in which, at least, time when the user selects the contact key 617 ("contact key" select time), and the identification image data 920 that is the continuous image data 902 in a time period before and after the time (that is, a part of the entire continuous image data 902) are integrated together. Note that the continuous image data 902 in the time period before and after the time based on time data (that is, a part of the entire continuous image data 902) is referred to as the identification image data 920, in the present specification.

The data set and others select screen 630 that is an example of a screen to be displayed on the display device 420 has a data set display section 632 and a start time input section 634, as illustrated in Fig. 8.

The data set display section 632 displays, in a list, the time (or date and time) when the user selects the contact key 617, and the number of the data set 910 labeled with the time. Positions, where the number and time of data set 910 are displayed, are data set select keys 636. The manager can select any of the data set select keys 636 by using the management side input device 430. When the manager selects any of the data set select keys 636, the management side control device 410 displays on the display device 420 the identification image display screen 638 as illustrated in Fig. 9.

Returning to Fig. 8, the start time input section 634 in the data set and others select screen 630 accepts a display start time of the continuous image data 902 requested to be displayed by the manager. With reference to Fig. 2, Fig. 3, and Fig. 8, when the manager inputs a desired time to the start time input section 634, the management side control device 410 transmits to the server 300 a time signal 692 including the time input. When the time signal 692 is transmitted to the server 300, from the server 300 to the management side control device 410, identification start time image data 930 that is the continuous image data 902 starting from the time is sent to the management device 400. Upon receiving the identification start time image data 930, the management side control device 410 displays an image based on the received identification start time image data 930, on an identification image display section 640 of the identification image display screen 638 illustrated in Fig. 9. Here, as illustrated in Fig. 3, the identification start time image data 930 means a series of image data representing a state of change along with the lapse of time of the operation screen 600 in a certain period of time after a time based on the time signal 692. The identification start time image data 930, as described above, is not limited to the certain period of time after the time based on the time signal 692, and may be a period of time that continues until there is stop operation from the manager after the time based on the time signal 692 (that is, the identification start time image data 930 does not end if there is no stop operation from the manager).

The identification image display screen 638 includes the above-described identification image display section 640, a still image acquisition key 642, and a return key 644. As described above, the identification image display section 640 displays an image based on the identification image data 920 included in the selected data set 910, or the image based on the identification start time image data 930 from an arbitrary time.

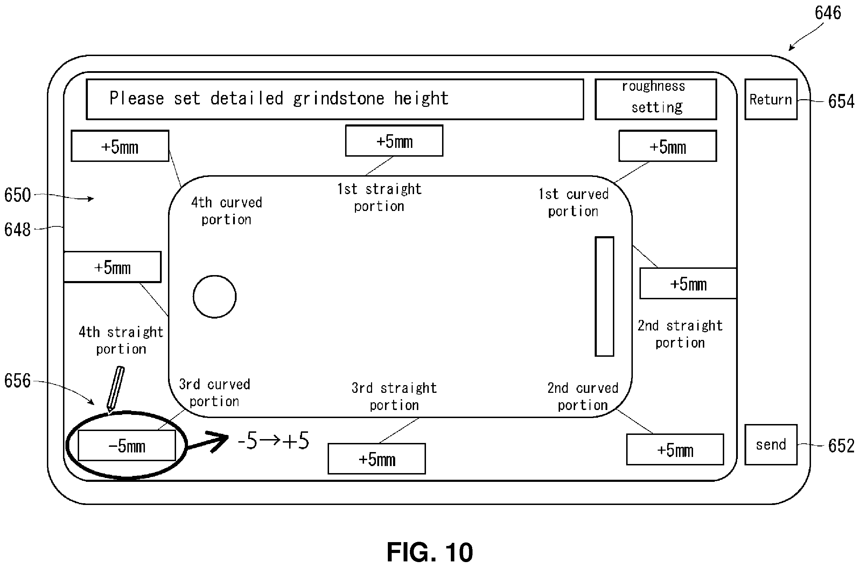

When the manager selects the still image acquisition key 642 included in the identification image display screen 638, the management side control device 410 acquires, as a still image 650, an image displayed on the identification image display section 640 when the still image acquisition key 642 is selected (see Fig. 10), and records the image in the management side storage device 440. Thereafter, the management side control device 410 displays a still image display screen 646 on the display device 420. The still image display screen 646 includes a still image display section 648, a still image transmission key 652, and a return key 654. The management side control device 410 displays the acquired still image 650 on the still image display section 648.

The management side control device 410 accepts writing 656 to the still image 650 using the management side input device 430 by the manager, in the still image display section 648. As the writing to the still image 650, a method for using a mouse as the management side input device 430, a method for using a touch pen, and the like can be considered.

After the writing 656 to the still image 650 is completed, when the manager selects the still image transmission key 652, the management side control device 410 generates written still image data 694 (see Fig. 2 and Fig. 3) in which information of the writing 656 is added to the still image 650, and transmits the data to the machine device 200. After the written still image data 694 is transmitted, the management side control device 410 again displays on the display device 420 the data set and others select screen 630 illustrated in Fig. 8.

Note that, when the manager selects the return key 644 in the identification image display screen 638, or the return key 654 in the still image display screen 646, the management side control device 410 displays on the display device 420 the data set and others select screen 630 illustrated in Fig. 8.

### (Functional block of process by machine device management system 100)

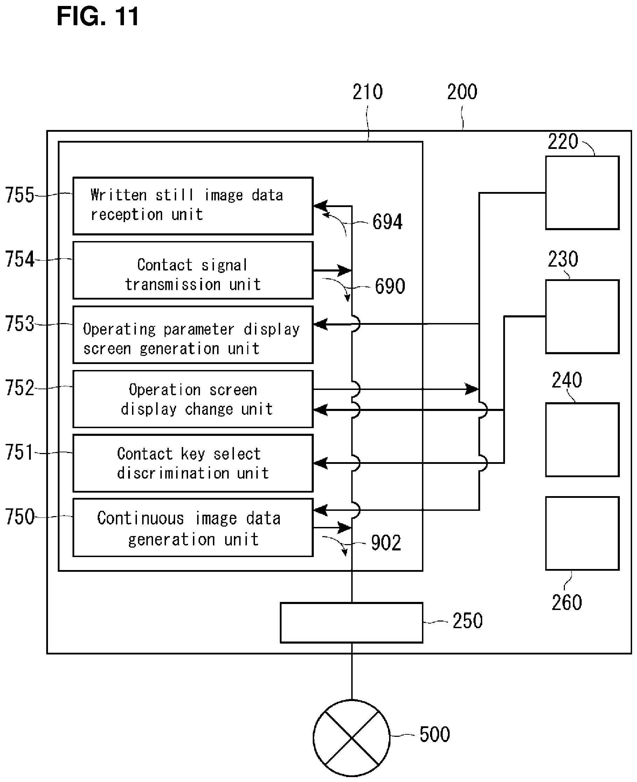

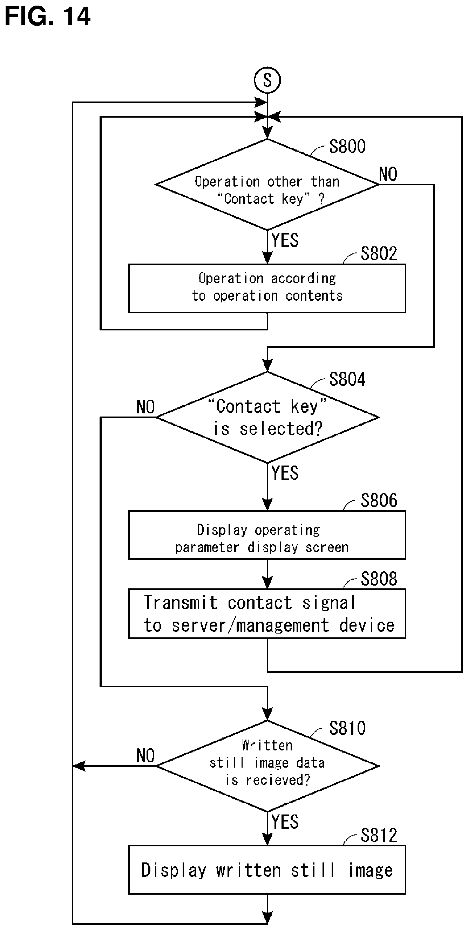

Next, a description is made for each function included in the machine device 200, server 300, and management device 400 of the machine device management system 100. Fig. 11 is a functional block diagram illustrating a process by the machine device 200. The process by the machine device 200 in the machine device management system 100 is generally performed by a continuous image data generation unit 750, a contact key select discrimination unit 751, an operation screen display change unit 752, an operating parameter display screen generation unit 753, a contact signal transmission unit 754, and a written still image data reception unit 755. The machine side control device 210 executes steps S800 to S812 (see Fig. 14) described later, thereby configuring the above units.

The continuous image data generation unit 750 has a function of always continuously generating image data of the operation screen 600 displayed on the operation screen display device 220, and transmitting the image data to the server 300.

The contact key select discrimination unit 751 has a function of discriminating whether or not operation of selecting the contact key 617 or operation other than selecting the contact key 617 is performed by the user.

The operation screen display change unit 752 has a function of changing contents of the operation screen 600 to be displayed on the operation screen display device 220 in accordance with the operation of the user.

The operating parameter display screen generation unit 753 has a function of generating the operating parameter display screen 606.

The contact signal transmission unit 754 has a function of generating a contact signal 690, and transmitting the generated contact signal 690 to the server 300 and the management device 400 through the machine side communication device 250.

The written still image data reception unit 755 has a function of receiving the written still image data 694 from the management device 400 through the machine side communication device 250.

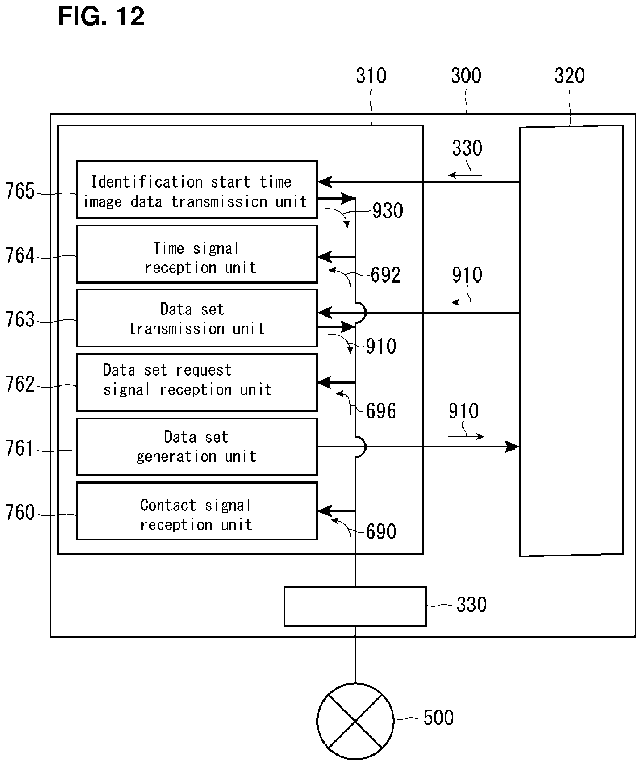

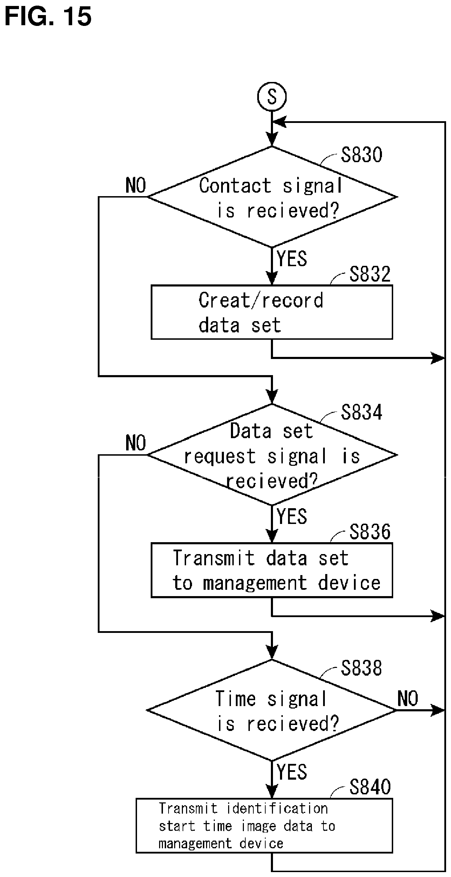

Fig. 12 is a functional block diagram illustrating a process by the server 300. The process by the server 300 is generally performed by a contact signal reception unit 760, a data set generation unit 761, a data set request signal reception unit 762, a data set transmission unit 763, a time signal reception unit 764, and an identification start time image data transmission unit 765. The control device 310 executes steps S830 to S840 (see Fig. 15) described later, thereby configuring the above units.

The contact signal reception unit 760 has a function of receiving the contact signal 690 from the machine device 200 through the server side communication device 330.

The data set generation unit 761 has a function of generating the data set 910 and storing the generated data set 910 to the storage device 320.

The data set request signal reception unit 762 has a function of receiving a data set request signal 696 from the management device 400 through the server side communication device 330.

The data set transmission unit 763 has a function of transmitting the data set 910 to the management device 400 through the server side communication device 330.

The time signal reception unit 764 has a function of receiving the time signal 692 from the management device 400 through the server side communication device 330.

The identification start time image data transmission unit 765 has a function of transmitting the identification start time image data 930 to the management device 400 through the server side communication device 330.

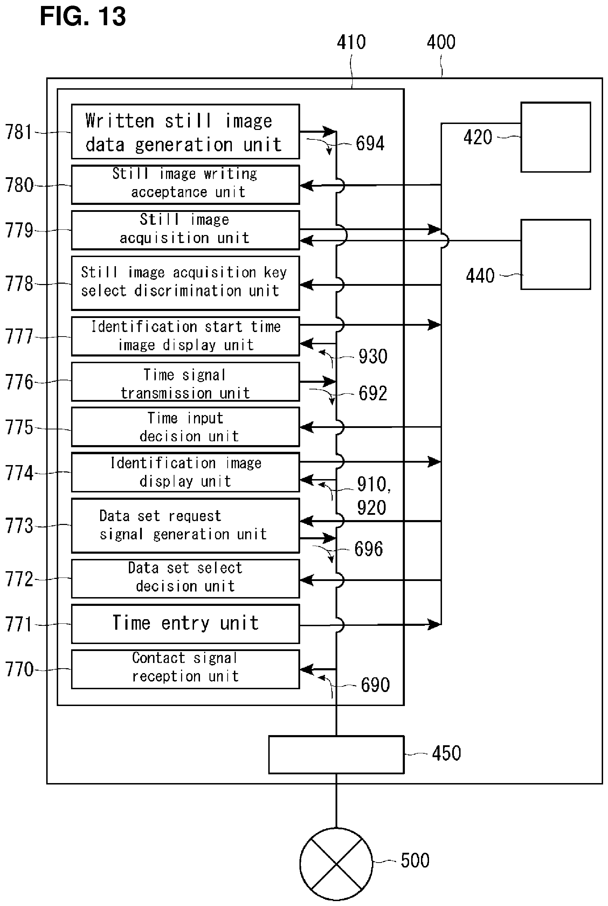

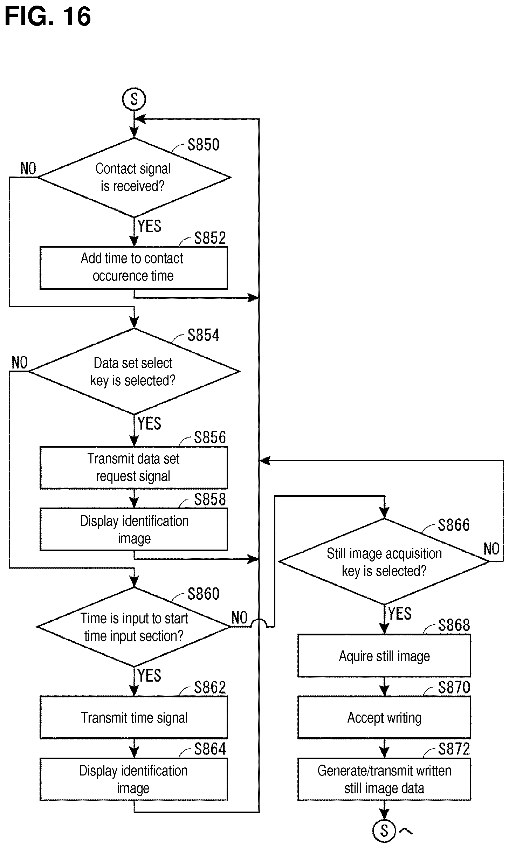

Fig. 13 is a functional block diagram illustrating a process by the management device 400. The process by the management device 400 is generally performed by a contact signal reception unit 770, a time entry unit 771, a data set select decision unit 772, a data set request signal generation unit 773, an identification image display unit 774, a time input decision unit 775, a time signal transmission unit 776, an identification start time image display unit 777, a still image acquisition key select discrimination unit 778, a still image acquisition unit 779, a still image writing acceptance unit 780, and a written still image data generation unit 781. The management side control device 410 executes steps S850 to S872 (see Fig. 16) described later, thereby configuring the above units.

The contact signal reception unit 770 has a function of receiving the contact signal 690 from the machine device 200 through the management side communication device 450.

The time entry unit 771 has a function of adding the number of a new data set 910 to the data set display section 632 in the data set and others select screen 630, and adding a time included in the contact signal 690 to a field of a contact occurrence time.

The data set select decision unit 772 has a function of discriminating whether or not the manager selects the data set select keys 636 displayed on the data set and others select screen 630.

The data set request signal generation unit 773 has a function of generating the data set request signal 696 corresponding to the selected data set select key 636, and transmitting the signal to the server 300.

The identification image display unit 774 has a function of displaying the image based on the identification image data 920 included in the data set 910 received from the server 300, on the identification image display screen 638 of the display device 420.

The time input decision unit 775 has a function of discriminating whether or not the manager inputs a time to the start time input section 634 of the data set and others select screen 630.

The time signal transmission unit 776 has a function of generating the time signal 692 corresponding to the time input by the manager, and transmitting the signal to the server 300 through the management side communication device 450.

The identification start time image display unit 777 has a function of displaying the image based on the identification start time image data 930 corresponding to the time signal 692, received from the server 300, on the identification image display screen 638.

The still image acquisition key select discrimination unit 778 has a function of discriminating whether or not the still image acquisition key 642 in the identification image display screen 638 is selected.

The still image acquisition unit 779 has a function of acquiring the still image 650 from the continuous image displayed on the identification image display section 640.

The still image writing acceptance unit 780 has a function of accepting the writing 656 to the still image 650 by the manager.

The written still image data generation unit 781 has a function of generating the written still image data 694 based on contents of the still image 650 and writing 656, and transmitting the data to the machine device 200.

### (Flow of process by machine device management system 100)

Next, a flow of the process by the machine device management system 100 will be described.

Fig. 14 is a flowchart of the process by the machine device 200. Fig. 15 is a flowchart of the process by the server 300. Fig. 16 is a flowchart of the process by the management device 400.

The machine side control device 210 in the machine device 200 of the present embodiment constantly generates the continuous image data 902 of each screen displayed on the operation screen display device 220 at intervals of 30 frames per second (30 fps), for example, and continues to transmit the data to the server 300 through the machine side communication device 250 and the network device 500 (see Fig. 3). In addition, time information is added to the continuous image data 902 (such as "03:00," "08:00," "10:00" in Fig. 3), and as described later, based on the time information, there is obtained the identification start time image data 930 that is started to be displayed from a desired time. The machine side control device 210 operates in this way, thereby configuring the continuous image data generation unit 750 (see Fig. 11). Under this premise, the machine device 200 performs the process illustrated in the flowchart of Fig. 14.

First, the machine side control device 210 determines whether or not the operation other than selecting the contact key 617 is performed by the user to the machine side input device 230 (S800). The machine side control device 210 operates in this way, thereby configuring a part of the contact key select discrimination unit 751 (see Fig. 11).

When the operation other than selecting the contact key 617 is performed by the user (when determination is YES in S800), the machine side control device 210 performs operation according to the operation contents (S802). The machine side control device 210 operates in this way, thereby configuring a part of the operation screen display change unit 752 (see Fig. 11). For example, when the detailed setting select key 614 in the operation screen 600 is selected, the machine side control device 210 displays the first detailed setting screen 602 (Fig. 5) on the operation screen display device 220, as described above. After the operation is performed according to the selected contents, the machine side control device 210 again determines whether or not the operation other than selecting the contact key 617 is performed by the user (S800). Note that, as described above, since the machine side communication device 250 constantly generates the continuous image data 902 of each screen displayed on the operation screen display device 220 at intervals of a certain period of time, and continuously transmits the data to the server 300, the screens of the operation screen 600 and the first detailed setting screen 602 before and after selecting the detailed setting select key 614 are all transmitted to the server 300 as the continuous image data 902 (see Fig. 3). For example, a video screen showing the following sequence of operation flow is stored in the server 300 in time series: in the operation screen display device 220, when the detailed setting select key 614 is selected on the TOP screen 601 of Fig. 4, the screen is changed to the first detailed setting screen 602 of Fig. 5; after the grindstone height is input in the first detailed setting screen 602, the next screen select section 620 is selected; the screen is then changed to the second detailed setting screen 604 of Fig. 6; and when the surface roughness is input, the screen is changed from the TOP screen 601 to the first detailed setting screen 602; after the grindstone height is input in the first detailed setting screen 602, the next screen select section 620 is selected; the screen is changed to the second detailed setting screen 604; and the grindstone roughness is input. In this way, since the continuous image data 902 is constantly generated/transmitted at the intervals of the certain period of time by the machine side control device 210, this description is omitted in the following.

Returning to Fig. 14, when the operation other than selecting the contact key 617 is not performed by the user (when determination is NO in S800), the machine side control device 210 determines whether or not the contact key 617 is selected (S804). The machine side control device 210 operates in this way, thereby configuring a part of the contact key select discrimination unit 751 (see Fig. 11).

When the contact key 617 is selected (when determination is YES in S804), the machine side control device 210 displays the operating parameter display screen 606 on the operation screen display device 220 (S806). The machine side control device 210 operates in this way, thereby configuring the operating parameter display screen generation unit 753 (see Fig. 11).

Thereafter, the machine side control device 210 generates the contact signal 690 for notifying that the contact key 617 is selected, and transmits the contact signal 690 to the server 300 and the management device 400 (S808). The machine side control device 210 operates in this way, thereby configuring the contact signal transmission unit 754 (see Fig. 11). After the contact signal 690 is transmitted to the server 300 and the management device 400, the machine side control device 210 again determines whether or not the operation other than selecting the contact key 617 is performed by the user (S800).

When the contact key 617 is not selected (when determination is NO in S804), that is, when the user does not perform any operation to the machine device 200, the machine side control device 210 determines whether or not the written still image data 694 is received from the management device 400 (S810). The machine side control device 210 operates in this way, thereby configuring a part of the written still image data reception unit 755 (see Fig. 11).

When the written still image data 694 is received (when determination is YES in S810), the machine side control device 210 displays the still image 650 based on the written still image data 694, on the operation screen display device 220 of the machine device 200 (S812). The machine side control device 210 operates in this way, thereby configuring a part of the written still image data reception unit 755 (see Fig. 11). Thereafter, the machine side control device 210 again determines whether or not the operation other than selecting the contact key 617 is performed by the user (S800).

When the written still image data 694 is not received (when determination is NO in S810), the machine side control device 210 again determines whether or not the operation other than selecting the contact key 617 is performed by the user (S800).

Next, contents of the process by the server 300 will be described. As described above, the continuous image data 902 of each screen displayed on the operation screen display device 220 of the machine device 200 is constantly transmitted to the server 300 from the machine device 200, and the control device 310 of the server 300 continuously stores the transmitted continuous image data in the storage device 320. Under this premise, the server 300 performs the process illustrated in the flowchart of Fig. 15.

First, the control device 310 determines whether or not the contact signal 690 is received from the machine device 200 (S830). The control device 310 operates in this way, thereby configuring a part of the contact signal reception unit 760 (see Fig. 12). When the contact signal 690 is received (when determination is YES in S830), the control device 310 creates the data set 910 based on the time included in the contact signal 690, and records the created data set 910 in the storage device 320 (S832). The control device 310 operates in this way, thereby configuring the data set generation unit 761 (see Fig. 12). After the data set 910 is recorded in the storage device 320, the control device 310 again determines whether or not the contact signal 690 is received from the machine device 200 (S830).

When the contact signal 690 is not received (when determination is NO in S830), the control device 310 determines whether or not the data set request signal 696 is received from the management device 400 (S834). The control device 310 operates in this way, thereby configuring the data set request signal reception unit (see Fig. 12).

When the data set request signal 696 is received (when determination is YES in S834), the control device 310 transmits to the management device 400 the data set 910 corresponding to the received data set request signal 696 (S836). The control device 310 operates in this way, thereby configuring the data set transmission unit 763 (see Fig. 12). Thereafter, the control device 310 again determines whether or not the contact signal 690 is received from the machine device 200 (S830).

When the data set request signal 696 is not received (when determination is NO in S834), the control device 310 determines whether or not the time signal 692 is received from the management device 400 (S838). The control device 310 operates in this way, thereby configuring the time signal reception unit 764 (see Fig. 12).

When the time signal 692 is received (when determination is YES in S838), the control device 310 transmits to the management device 400 the identification start time image data 930 from the time included in the received time signal 692 (S840). The control device 310 operates in this way, thereby configuring a part of the identification start time image data transmission unit 765 (see Fig. 12). Thereafter, the control device 310 again determines whether or not the contact signal 690 is received from the machine device 200 (S830).

When the time signal 692 is not received (when determination is NO in S838), the control device 310 again determines whether or not the contact signal 690 is received from the machine device 200 (S830).

Next, contents of the process by the management device 400 will be described with reference to the flowchart illustrated in Fig. 16. First, the management side control device 410 determines whether or not the contact signal 690 is received from the machine device 200 (S850). The management side control device 410 operates in this way, thereby configuring a part of the contact signal reception unit 770 (see Fig. 13). When the contact signal 690 is received (when determination is YES in S850), the management side control device 410 adds the number of a new data set 910 to the data set display section 632 in the data set and others select screen 630, and adds the time included in the contact signal 690 to the field of the contact occurrence time (S852). The management side control device 410 operates in this way, thereby configuring the time entry unit 771 (see Fig. 13). Thereafter, the management side control device 410 again determines whether or not the contact signal 690 is received from the machine device 200 (S850).

When the contact signal 690 is not received (when determination is NO in S850), the management side control device 410 determines whether or not the manager selects any one of the data set select keys 636 displayed on the data set and others select screen 630 of the display device 420 (S854). The management side control device 410 operates in this way, thereby configuring the data set select decision unit 772 (see Fig. 13).

When any one of the data set select keys 636 is selected (when determination is YES in S854), the management side control device 410 transmits the data set request signal 696 to the server 300, and waits for a response from the server 300 (S856). The management side control device 410 operates in this way, thereby configuring the data set request signal generation unit 773 (see Fig. 13).

When the selected data set 910 is transmitted from the server 300, the management side control device 410 displays the identification image display screen 638 on the display device 420, and displays on the identification image display section 640 the image based on the identification image data 920 included in the data set 910 (S858). The management side control device 410 operates in this way, thereby configuring the identification image display unit 774 (see Fig. 13). Thereafter, the management side control device 410 again determines whether or not the contact signal 690 is received from the machine device 200 (S850).

When the data set select key 636 is not selected (when determination is NO in S854), the management side control device 410 determines whether or not a time is input to the start time input section 634 in the data set and others select screen 630 (S860). The management side control device 410 operates in this way, thereby configuring the time input decision unit 775 (see Fig. 13).

When the time is input to the start time input section 634 (when determination is YES in S860), the management side control device 410 transmits to the server 300 the time signal 692 including the input time, and waits for a response from the server 300 (S862). The management side control device 410 operates in this way, thereby configuring the time signal transmission unit 776 (see Fig. 13).

When the identification start time image data 930 starting from the input time is transmitted from the server 300, the management side control device 410 displays the identification image display screen 638 on the display device 420, and displays on the identification image display section 640 the image based on the identification start time image data 930 (S864). The management side control device 410 operates in this way, thereby configuring the identification start time image display unit (see Fig. 13). Thereafter, the management side control device 410 again determines whether or not the contact signal 690 is received from the machine device 200 (S850).

When the time is not input to the start time input section 634 (when determination is NO in S860), the management side control device 410 determines whether or not the still image acquisition key 642 of the identification image display screen 638 is selected by the manager (S866). The management side control device 410 operates in this way, thereby configuring the still image acquisition key select discrimination unit 778 (see Fig. 13).

When the still image acquisition key 642 is selected (when determination is YES in S866), the management side control device 410 acquires as the still image 650 an image displayed on the identification image display section 640 when the still image acquisition key 642 is selected, and records the image in the management side storage device 440 (S868). The management side control device 410 operates in this way, thereby configuring the still image acquisition unit 779 (see Fig. 13).

Thereafter, the management side control device 410 accepts the writing 656 by the manager to the acquired still image 650 (S870). The management side control device 410 operates in this way, thereby configuring the still image writing acceptance unit 780 (see Fig. 13). When the writing 656 to the still image 650 is completed and the manager selects the still image transmission key 652, the management side control device 410 generates the written still image data 694 in which information of the writing 656 is added to the still image 650, and transmits the data to the machine device 200 (S872). The management side control device 410 operates in this way, thereby configuring the written still image data generation unit 781 (see Fig. 13). Thereafter, the management side control device 410 again determines whether or not the contact signal 690 is received from the machine device 200 (S850).

When the still image acquisition key 642 is not selected (when determination is NO in S866), the management side control device 410 again determines whether or not the contact signal 690 is received from the machine device 200.

### (Management example employing machine device management system 100 according to the above embodiment)

As a management example employing the machine device management system 100 according to the above embodiment, a description is made for the machine device management system 100 applied to a processing machine. With reference to Fig. 1 and Fig. 2, the processing machine (i.e., machine device 200) of the present embodiment is capable of performing grinding processing and drilling processing of the circumference of the glass plate for the smart phone and the like, and further, the machine device 200 is capable of performing polishing, cutting, cleaning, and the like to the glass plate that is a processing target.

Note that, as a premise, as illustrated in Fig. 3, the machine side control device 210 of the machine device 200 constantly generates the continuous image data 902 of each screen displayed on the operation screen display device 220 at intervals of 30 frames per second (30 fps), and continues to transmit the data to the server 300 through the machine side communication device 250 and the network device 500. In addition, the time information is added to the continuous image data 902, and as described later, based on the time information, the identification start time image data 930 in a desired time can be accessed.

Normally, the user operating the machine device 200 operates the operation screen display device 220 (determination is YES in S800 of Fig. 14), and inputs and sets on the operation screen 600 various processing conditions to the processing target (S802). For example, in the operation screen 600 illustrated in Fig. 4, when the grindstone height is set for grinding processing of the processing target, the user selects the detailed setting select key 614 corresponding to the setting item "grindstone height" (In the case of the present embodiment, since the operation screen display device 220 is a touch panel, selection is made by touching a desired detailed setting select key 614. The same applies to the following). Upon receipt of the selection, the machine side control device 210 displays the first detailed setting screen 602 illustrated in Fig. 5 on the operation screen display device 220. Note that, processing conditions that can be selected by the user, includes not only the "grindstone height" but also, for example, a "grindstone diameter," "grindstone type," "conveying position," "grinding fluid supply method," and "modification value input to default value."

The first detailed setting screen 602 is provided with the numerical value setting sections 622 capable of setting the grindstone height in each portion (first to fourth straight portions and first to fourth curved portions) in which grinding processing is performed. The user inputs a predetermined numerical value to each of the numerical value setting sections 622.

In the machine device 200 of the present embodiment, further, the surface roughness of the grinding processing portion can be set. When setting the surface roughness, the user selects the next screen select section 620 in the first detailed setting screen 602 (determination is YES in S800 of Fig. 14). Upon receipt of the selection, the machine side control device 210 displays the second detailed setting screen 604 illustrated in Fig. 6 on the operation screen display device 220 (S802).

The second detailed setting screen 604 is provided with the roughness setting sections 628 capable of setting the surface roughness of respective positions (circumference, circular hole, and, rectangular hole) in which grinding processing is performed. The user inputs a desired surface roughness (such as "finish (finish processing)," "rough (rough processing)") to each of the roughness setting sections 628.

Having completed the input, the user selects the TOP screen select section 626 in the second detailed setting screen 604 (determination is YES in S800). Upon receipt of the selection, the machine side control device 210 again displays the operation screen 600 illustrated in Fig. 4 on the operation screen display device 220 (S802).

After the settings necessary for processing are all performed in this way, the user selects a "processing start" command key 616 in the operation screen 600 (determination is YES in S800). Upon receipt of the selection, the machine side control device 210 operates the processing unit 260 based on the set contents to process the glass plate (processing target) (S802).

Meanwhile, when processing work is continued by operating the machine device 200 as described above, a malfunction may occur that a processing result desired by the user cannot be obtained. When such a malfunction occurs and it is determined that the malfunction cannot be solved by oneself, the user selects the contact key 617 in the operation screen 600 illustrated in Fig. 4 to receive information about a countermeasure from the manager operating the management device 400 (determination is NO in S800 illustrated in Fig. 14: determination is YES in subsequent S804).

When the contact key 617 is selected, the machine side control device 210 displays the operating parameter display screen 606 as illustrated in Fig. 7 on the operation screen display device 220 (S806). As described above, since the machine side control device 210 constantly transmits to the server 300 the continuous image data 902 of the operation screen 600 of the operation screen display device 220, the operating parameter display screen 606 is also transmitted to the server 300 and is stored in the storage device 320 of the server 300. In addition, the machine side control device 210 transmits, to the server 300 and the management device 400, the contact signal 690 indicating that the contact key 617 is selected (S808).

The control device 310 of the server 300 having received the contact signal 690 from the machine device 200 (YES in S830 of Fig. 15), as illustrated in Fig. 3, creates a data set 910 including at least a "contact key" select time that is a time when the contact key 617 is selected, and the identification image data 920 that is the continuous image data 902 in the time period before and after the time, and stores the data set 910 in the storage device 320 of the server 300 (S832).

Meanwhile, the management side control device 410 of the management device 400 having received the contact signal 690 from the machine device 200 (YES in S850 of Fig. 16), adds a new number as the data set select key 636 to the data set display section 632 in the data set and others select screen 630 displayed on the display device 420 (see Fig. 8), and adds the contact key select time (included in the contact signal 690) to the contact occurrence time (S852 in Fig. 16).

The manager, knowing that a new data set select key 636 is added, selects the new data set select key 636 on the display device 420 by using the management side input device 430 (YES in S854). Then, the management side control device 410 transmits the data set request signal 696 to the server 300 (S856). Note that, at this stage, the manager may contact the user (or the user may contact the manager) through communication means such as a telephone or e-mail, to clarify contents of the malfunction.

The control device 310 of the server 300 having received the data set request signal 696 from the management device 400 (YES in S834 of Fig. 15) takes out the data set 910 corresponding to the selected data set request signal 696 from the storage device 320, and transmits the data set to the management device 400 (S836).

The management side control device 410 of the management device 400 having received the data set 910 from the server 300 displays the identification image display screen 638 (see Fig. 9) on the display device 420, and further displays the image (identification image) based on the identification image data 920 included in the data set 910 on the identification image display section 640 in the identification image display screen 638 (S858 of Fig. 16).

Returning to Fig. 9, the manager checks the image displayed on the identification image display section 640 to consider the reason and remedial measure of the malfunction. The manager checks the image, and, at timing at which a screen is displayed that seems to need some sort of contact to the user, selects the still image acquisition key 642 of the identification image display screen 638 (YES in S866 of Fig. 16). When the still image acquisition key 642 is selected, the management side control device 410 acquires the image displayed on the identification image display section 640 as the still image 650 at the timing at which the still image acquisition key 642 is selected, and displays the still image 650 on the still image display section 648 of the still image display screen 646 (see Fig. 10) displayed on the display device 420 (S868).

Then, the manager performs on the still image 650 the writing 656 necessary for the contact to the user by using the management side input device 430 (S870). When the writing 656 is completed, the manager selects the still image transmission key 652 of the still image display screen 646. When the still image transmission key 652 is selected, the management side control device 410 generates the written still image data 694 in which the writing 656 is added to the still image 650, and transmits the written still image data 694 to the machine device 200 (S872).

The machine side control device 210 of the machine device 200 having received the written still image data 694 from the management device 400 (YES in S810 of Fig. 14) displays a written still image based on the written still image data 694 on the operation screen display device 220 (S812). The user knows the cause and measure of the malfunction by checking the written still image, and performs re-input of the operating parameters 904, replacement of a component, and the like as necessary. To inform the cause and measure in more detail, the telephone, e-mail, and the like may be used in combination between the manager and the user.

In addition, when it is difficult to identify the cause of the malfunction with only the identification image data 920 of the data set 910 received from the server 300, the manager inputs a start time of the continuous image data 902 to be checked to the start time input section 634 of the data set and others select screen 630 (see Fig. 8) (YES in S860 of Fig. 16). When the time is input to the start time input section 634, the management side control device 410 transmits the time signal 692 including the start time to the server 300 (S862). The control device 310 of the server 300 having received the time signal 692 from the management device 400 (YES in S838 of Fig. 15) transmits to the management device 400 the continuous image data 902 from the start time included in the time signal 692 (that is, the identification start time image data 930) (S840). The management side control device 410 of the management device 400 having received the identification start time image data 930 from the server 300 displays the identification image display screen 638 on the display device 420, and displays the image based on the identification start time image data 930 on the identification image display section 640 of the identification image display screen 638 (S864). Since subsequent processes are the same as those described above, descriptions thereof are omitted.

### (Feature 1 of machine device management system 100)

The machine device management system 100 according to the present embodiment is capable of constantly storing the continuous image data 902, in which the operation screen 600 displayed on the operation screen display device 220 of the machine device 200 is continuously acquired as a moving image, as the machine operation data 900 in the storage device 320, and displaying, as necessary, the image based on the identification start time image data 930 from an arbitrary time based on the continuous image data 902 on the display device 420 of the management device 400.

This enables the manager operating the management device 400 to check the image from the arbitrary time to consider the cause and measure of the malfunction occurring in the machine device 200, so that the cause of the malfunction can be more accurately known, and more accurate measure can be considered.

For example, when the user does not thoroughly understand operation of the machine device 200, even when the manager instructs displaying of the operation screen through the e-mail, telephone, or the like, the user does not understand the operation method and cannot respond appropriately. However, in the machine device management system 100, even when the user does not understand the operation of the machine device 200, a change of the operation screen with time can be checked on the manager side, so that operation performed by the user can be understood and a response to the malfunction can be performed easily.

### (Feature 2 of machine device management system 100)

In the machine device management system 100 according to the present embodiment, as the machine operation data 900, the operating parameters 904, which include automatic setting parameters not seen by the user in normal operation, are also stored in the storage device 320. By checking the operating parameters 904 as necessary, accuracy can be improved in investigation of the cause and consideration of measures for the malfunction by the manager and user.

For example, when the user does not thoroughly understand operation of the machine device 200, even when the manager instructs a method for displaying the operating parameters 904 through the e-mail, telephone, or the like, there is a possibility that the user does not understand the operation method and may not be able to display the operating parameters 904. However, in the machine device management system 100, even when the user does not understand the operation of the machine device 200, the operating parameters 904 can be checked on the manager side, and the response to the malfunction can be performed more easily.

### (Feature 3 of machine device management system 100)

Further, the user can easily check the operating parameters 904 by displaying the operating parameters 904 as the operating parameter display screen 606 on the operation screen display device 220 of the machine device 200, and the manager can also see the parameter with the management device 400 since the operating parameter display screen 606 is included in the continuous image data 902. Accordingly, the time required for investigation of the cause and consideration of measures for the malfunction can be shortened.

### (Feature 4 of machine device management system 100)

In the machine device management system 100 according to the present embodiment, when the user selects the contact key 617 displayed on the operation screen display device 220, the machine side control device 210 accepts the selection and displays the operating parameter display screen 606 including the operating parameters 904 on the operation screen display device 220. Accordingly, the user knowing that the malfunction has occurred can check the operating parameters 904 by only selecting the contact key 617, and start investigation of the cause and consideration of measures for the malfunction immediately.

### (Feature 5 of machine device management system 100)

In addition, in the machine device management system 100 according to the present embodiment, when the user selects the contact key 617, the machine side control device 210 transmits to the management device 400 the contact signal 690 for notifying that the contact key 617 is selected. Accordingly, the user can contact the manager to notify that the malfunction has occurred by only selecting the contact key 617.

### (Feature 6 of machine device management system 100)

In the machine device management system 100 according to the present embodiment, the control device 310 having received the contact signal 690 for notifying that the contact key 617 is selected stores in the storage device 320 the data set 910 including the identification image data 920 that is the continuous image data 902 in the time period before and after the time when the contact key 617 is selected. Accordingly, the manager can check the operation screen 600 in the time period before and after the time when the contact key 617 is selected, with the image based on the identification image data 920 included in the data set 910, and efficiency can be improved in investigation of the cause and consideration of measures for the malfunction.

### (Feature 7 of machine device management system 100)

In the machine device management system 100 according to the present embodiment, the management side control device 410 acquires the still image 650 from the continuous image data 902, and accepts the writing 656 to the still image 650 and generates the written still image data 694, and then transmits the written still image data 694 to the operation screen display device 220 of the machine device 200. Accordingly, the cause and measure of the malfunction and the like considered by the manager can be clearly shown to the user as the written still image data 694.

### (Feature 8 of machine device management system 100)

In the machine device management system 100 according to the present embodiment, each time the user selects the contact key 617, the corresponding data set 910 is stored and accumulated in the storage device 320 of the server 300, and the number and contact occurrence time of the data set 910, which are accumulated in the data set display section 632 of the data set and others select screen 630 displayed on the display device 420 of the management device 400, are added. That is, accumulation of the data set 910 becomes like a collection of cases contributing to solve the malfunction occurring in the machine device 200. Accordingly, when a malfunction having the same or similar contents has occurred in the past, the manager can refer to the accumulation when considering the cause and measure of the current malfunction, by selecting the data set select key 636 corresponding to the malfunction having the similar contents and checking an image based on the continuous image data included in the data set 910.

### (Program executed by machine side control device 210)

The machine side control device 210 in the machine device 200 executes a program including a step for transmitting to the storage device 320 the machine operation data 900 including the continuous image data generated by constantly acquiring the operation screen 600 operated by the user. Based on the continuous image data, an image from an arbitrary time is displayed on the display device 420.

### (Program executed by control device 310)

The control device 310 in the server 300 executes a program including: a step for storing in the storage device 320 the machine operation data 900 including the continuous image data generated by constantly acquiring the operation screen 600 of the machine device 200 operated by the user; and a step for transmitting an image from an arbitrary time based on the continuous image data, to the display device 420 capable of displaying the image based on the continuous image data stored in the storage device 320.

### (Program executed by management side control device 410)

The management side control device 410 in the management device 400 executes a program including: a step for receiving an image from the arbitrary time based on the continuous image data from the storage device 320 for storing the machine operation data 900 including the continuous image data generated by constantly acquiring the operation screen 600 of the machine device 200 operated by the user; and a step for displaying the image on the display device 420.

### (Modification A)

In the above embodiment, regarding the operating parameters 904, since the operating parameter display screen 606 including the operating parameters 904 is taken in as the continuous image data 902, the manager can check the operating parameters 904 by displaying the operating parameter display screen 606 on the display device 420. Instead, the machine side control device 210 may transmit the operating parameters 904 themselves to the server 300 to store the operating parameters 904 in the storage device 320, and in accordance with a request from the management device 400, the control device 310 may transmit the operating parameters 904 to the management device 400. Accordingly, the manager can handle, not the operating parameters 904 on the operating parameter display screen 606, but the operating parameters 904 as numerical value data, and to more efficiently investigate the cause and consider the measures for the malfunction by handling the operating parameters 904 that are transcribed to and processed in spreadsheet software or the like.

### (Modification B)

When the control device 310 receives the contact signal 690 from the machine device 200 and generates a new data set 910, the control device 310 may transmit to the management device 400 another data set including contents similar to contents of the new data set 910 (such as the time when the contact key 617 is selected, and contents of the identification image data 920). By sending to the management device 400 the other data set having similar contents of the malfunction, the manager can consider the cause and measure of the current malfunction by referring to the other malfunction cases, and more efficiently investigate the cause and consider the measures for the malfunction.

### (Modification C)

In addition, in the above-described embodiment, the manager notifies the user of the cause and measure of the malfunction by transmitting the written still image data 694 to the machine device 200; however, additionally or alternatively, the system may be configured so that the manager can change the operating parameters 904 in the machine device 200 directly from the management device 400. Although not illustrated, specifically, according to an instruction from the manager, the management side control device 410 transmits to the machine device 200 an operating parameter change signal including contents to be changed of the operating parameters 904. The contents to be changed of the operating parameters 904 may be a difference to the operating parameters 904 currently set in the machine device 200, or may be all contents of the operating parameters 904 including contents not to be changed. The machine side control device 210 of the machine device 200 accepts the operating parameter change signal, and then changes the operating parameters 904 of the machine device 200 based on the operating parameter change signal. In this way, the manager who has considered the cause and measure of the malfunction changes the operating parameters 904 of the machine device 200 directly, and can thereby respond quickly and accurately without troubling the user.

### (Modification D)

In the above-described embodiment, the continuous image data 902 and the operating parameters 904 are stored as the machine operation data 900 in the storage device 320 of the server 300; however, the machine operation data 900 is not limited thereto. In addition, the machine operation data 900 may be stored in, for example, the machine side storage device 240 or the management side storage device 440. Each of the storage devices 240, 320, 440 in which the machine operation data 900 is stored is the "storage device" of the machine device management system 100.

### (Modification E)

In addition, the machine operation data 900 may include the still image and moving image captured by the user. Specifically, the user, under the instruction of the manager or voluntarily, captures the still image and moving image of a predetermined position of the machine device 200 (for example, near the spindle during grinding processing, or the entire of machine device 200 during grinding processing) and generates "user captured image data." Thereafter, when the user inputs the user captured image data to the machine device 200, the machine side control device 210 transmits to the server 300 the user captured image data as a part of the machine operation data 900. The control device 310 having received the user captured image data from the machine device 200 stores the data in the storage device 320.

In addition, the control device 310 having received the user captured image data transmits, to the management device 400, that the user captured image data is received, and a user captured image data reception signal including a captured time of the user captured image data to the management device 400. The management side control device 410 having received the user captured image data reception signal adds the captured time and a number assigned to the received user captured image data reception signal, to a user captured image display section (not illustrated) of the data set and others select screen 630. These positions, each of which displaying the number and captured time, are user captured image select keys, and when the manager selects any of the user captured image select keys, the user captured image data corresponding to a selected user captured image select key is transmitted from the server 300, and the management side control device 410 displays a user captured image based on the user captured image data on the identification image display section 640 of the identification image display screen 638.

Accordingly, even when a malfunction occurs in which the cause and measure cannot be considered with only the continuous image data 902 and the operating parameters 904 of the operation screen 600, the manager can more efficiently investigate the cause and consider the measure by checking the still image and moving image of the necessary position captured by the user.

### (Modification F)

Differently from the above embodiment, the machine device management system 100 may include only minimum necessary functions. That is, the machine device management system 100 may only include a configuration in which the continuous image data 902 from the machine device 200 is stored in the storage device 320 of the server 300, and the continuous image data 902 is checked with the management device 400. For example, the system may have a configuration in which the data set 910 is not created or stored. In addition, the system may not include a configuration in which the still image 650 is acquired and writing instruction is given to the still image 650. In this case, regarding a response to the malfunction, it can be considered that, for example, the manager checks the image (video) based on the continuous image data 902 and instructs the response to the user through the telephone and the like. In addition, the system may not have a configuration in which the contact signal 690 is transmitted to the management device 400 when the contact key 617 is selected. In this case, the user contacts the manager through the telephone and the like when the malfunction occurs.

### (Modification G)

In the above embodiment, a case has been described in which the operating parameters 904 are displayed on the operation screen 600 when the user selects the contact key 617; however, the operating parameters 904 can be automatically displayed on the operation screen 600 when a mechanical malfunction occurs in the machine device 200. That is, the system may have a configuration in which, when the selection of the contact key 617 and mechanical malfunction are detected, an acquisition signal of the operating parameters 904 is transmitted in the machine device 200, and the machine side control device 210 receives the acquisition signal, and the operating parameters 904 are displayed on the operation screen 600 (for example, the operating parameter display screen 606 is displayed).

### (Modification H)

In the above embodiment, the operation screen display device 220 is provided on the machine device 200 for displaying the operation screen 600 for the user to operate the machine device 200; however, the operation screen display device 220 can be provided at a position away from the machine device 200. For example, when the machine device 200 is controlled by a general PC, a screen of the PC corresponds to the operation screen display device 220. Therefore, the continuous image data 902 for the screen of the PC is stored in the storage device 320 of the server 300.

### (Modification I)

In the above embodiment, the image based on the continuous image data 902 of the operation screen 600 operated by the user is displayed on the display device 420 of the management device 400; however, additionally or alternatively, when an image in which a specific location is fixedly captured for the purpose of inspection or the like, or an image in which a processing state by the machine device 200 is captured is used as the continuous image data 902, the system may be configured to be able to display the image based on the data on the display device 420.

### (Modification J)

In addition, the system may be configured to be able to display a plurality of screens by one or both of the operation screen display device 220 of the machine device 200, and the display device 420 of the management device 400. As means for displaying the plurality of screens, a plurality of monitors may be used, or one monitor may simultaneously display the plurality of screens. In this way, by enabling the plurality of screens to be displayed, for example, in a case of the operation screen display device 220, by simultaneously displaying the operation screen 600 showing a current state and the written still image data 694 transmitted from the manager, it becomes possible to perform appropriate input to the operation screen 600 while checking an image based on the written still image data 694. In addition, when the display device 420 is used, it becomes possible to perform writing to the still image 650 while checking the image based on the continuous image data 902.

It should be understood that the embodiments disclosed herein are illustrative in all points and not restrictive. It is intended that the scope of the present invention is described by the appended claims, rather than the description above, and all the modifications within the meaning and scope equivalent to the claims are included.

### REFERENCE SIGNS LIST

100: Machine device management system
200: Machine device
210: Machine side control device
220: Operation screen display device
230: Machine side input device
240: Machine side storage device
250: Machine side communication device
260: Processing unit
300: Server
310: Control device
320: Storage device
330: Server side communication device
340: Server side input/display device
400: Management device
410: Management side control device
420: Display device
430: Management side input device
440: Management side storage device
450: Management side communication device
500: Network device
600: Operation screen
601: TOP screen
602: First detailed setting screen
604: Second detailed setting screen
606: Operating parameter display screen
607: Operating parameter display section
608: TOP screen select section
610: Message display section
612: Parameter display section
614: Detailed setting select key
616: Command key
617: Contact key
618: Message display section
620: Next screen select section
622: Numerical value setting section
624: Message display section
626: TOP screen select section
628: Roughness setting section
630: Data set and others select screen
632: Data set display section
634: Start time input section
636: Data set select key
638: Identification image display screen
640: Identification image display section
642: Still image acquisition key
644: Return key
646: Still image display screen
648: Still image display section
650: Still image
652: Still image transmission key
654: Return key
656: Writing
690: Contact signal
692: Time signal
694: Written still image data
696: Data set request signal
750: Continuous image data generation unit
751: Contact key select discrimination unit
752: Operation screen display change unit
753: Operating parameter display screen generation unit
754: Contact signal transmission unit
755: Written still image data reception unit
760: Contact signal reception unit
761: Data set generation unit
762: Data set request signal reception unit
763: Data set transmission unit
764: Time signal reception unit
765: Identification start time image data transmission unit
770: Contact signal reception unit
771: Time entry unit
772: Data set select decision unit
773: Data set request signal generation unit
774: Identification image display unit
775: Time input decision unit
776: Time signal transmission unit
777: Identification start time image display unit
778: Still image acquisition key select discrimination unit
779: Still image acquisition unit
780: Still image writing acceptance unit
781: Written still image data generation unit
900: Machine operation data
902: Continuous image data
904: Operating parameter
910: Data set
920: Identification image data
930: Identification start time image data

## Claims

1. A mechanical device management system comprising:
a mechanical device having an operation screen display device for displaying an operation screen to be operated by a user;
a storage device for storing mechanical operation data including continuous image data generated by constantly acquiring the operation screen;
a management device disposed at a position different from the mechanical device, the management device including a display device capable of displaying an image based on the continuous image data stored in the storage device; and
a control device for sending to the display device the image from an arbitrary time based on the continuous image data.

2. The mechanical device management system according to claim 1, wherein the mechanical operation data further includes operating parameters of the mechanical device.

3. The mechanical device management system according to claim 2, wherein the mechanical device has a machine side control device for causing the operating parameters to be displayed on the operation screen display device.

4. The mechanical device management system according to claim 3, wherein
the operation screen includes a contact key which is selectable by a user, and
the machine side control device accepts selection of the contact key, and displays the operating parameters on the operation screen display device.

5. The mechanical device management system according to claim 4, wherein the machine side control device having accepted the selection of the contact key further transmits the operating parameters to the storage device.

6. The mechanical device management system according to claim 4 or 5, wherein the machine side control device having accepted the selection of the contact key transmits to the management device a contact signal for notifying that the contact key is selected.

7. The mechanical device management system according to any one of claims 4 to 6, wherein
each time the contact key is selected, the operating parameters displayed by the selection of the contact key, and a data set including identification image data being the continuous image data in a time period before and after the selection of the contact key are recorded in the storage device, and
the management device receives any of the data sets from the storage device, and displays on the display device the operating parameters and the identification image data included in the data set.

8. The mechanical device management system according to claim 7, wherein
the control device transmits, to the management device, another of the data sets including contents similar to contents of the data set recorded in the storage device by the selection of the contact key.

9. The mechanical device management system according to any one of claims 3 to 8, wherein
the management device transmits to the mechanical device an operating parameter change signal for changing the operating parameters in the mechanical device, and
after acceptance of the operating parameter change signal, the machine side control device of the mechanical device changes the operating parameters of the mechanical device based on the operating parameter change signal.

10. The mechanical device management system according to any one of claims 1 to 9, wherein
the management device further has a management side control device, and
the management side control device acquires still image data from the continuous image data, and accepts writing to a still image based on the still image data and generates a written still image, and then transmits the written still image to the mechanical device.

11. A mechanical device management device comprising a display device for displaying an image from an arbitrary time based on continuous image data received from a storage device for storing mechanical operation data including the continuous image data, the continuous image data being generated by constantly acquiring an operation screen of a mechanical device to be operated by a user.

12. A server for managing a mechanical device, the server comprising:
a storage device for storing mechanical operation data including continuous image data generated by constantly acquiring an operation screen of a mechanical device to be operated by a user; and
a control device for transmitting, to a display device capable of displaying an image based on the continuous image data stored in the storage device, the image from an arbitrary time based on the continuous image data.

13. A mechanical device comprising an operation screen display device for displaying an operation screen to be operated by a user,
the mechanical device for transmitting, to a storage device, mechanical operation data including continuous image data generated by constantly acquiring the operation screen,
wherein an image from an arbitrary time is displayed on the display device based on the continuous image data.

14. A mechanical device management method comprising displaying an image on a display device upon reception of the image from an arbitrary time based on continuous image data, from a storage device for storing mechanical operation data including the continuous image data generated by constantly acquiring an operation screen of a mechanical device to be operated by a user.

15. A mechanical device management method comprising:
storing, in a storage device, mechanical operation data including continuous image data generated by constantly acquiring an operation screen of a mechanical device to be operated by a user; and
transmitting, to a display device capable of displaying an image based on the continuous image data stored in the storage device, the image from an arbitrary time based on the continuous image data.

16. A mechanical device management method comprising
transmitting, to a storage device, mechanical operation data including continuous image data generated by constantly acquiring an operation screen to be operated by a user,
wherein an image from an arbitrary time is displayed on the display device in the mechanical device, based on the continuous image data.
